# EUROPÄISCHE PATENTANMELDUNG

(11) **EP 1 635 185 A2**
(43) Veröffentlichungstag der Anmeldung: **15.03.2006**
(21) Anmeldenummer: 05106766.8
(22) Anmeldetag: 22.07.2005
(51) Int. Cl.: G01S 5/02

(54) **Verfahren und Vorrichtung zum Bestimmen des Aufenthaltsortes einer Teilnehmerstation eines Funkkommunikationssystems**

(30) Priorität: 08.09.2004 DE 102004043534
(71) Anmelder: SIEMENS AKTIENGESELLSCHAFT, 80333 München (DE)
(72) Erfinder: Druzinic-Fiebach, Rok, Dr., 16548 Glienicke (DE); Schmitz, Heiko, Dr., 13347 Berlin (DE); Kuipers, Martin, 14624 Dallgow-Döberitz (DE); Meiling, Axel, 82024 Taufkirchen (DE); Gradalski, Przemyslaw, 54234 Wroclaw (PL)

(57) **Zusammenfassung**

Bei dem Verfahren zum Bestimmen des Aufenthaltsortes einer Teilnehmerstation eines Funkkommunikationssystems wird die Anzahl und/oder die Signalqualität der von der Teilnehmerstation an ihrer Position empfangenen Satellitensignale als Indiz dafür berücksichtigt, dass sich die Teilnehmerstation in einem Gebäude aufhält.

## Beschreibung

Verfahren zum Bestimmen des Aufenthaltsortes einer Teilnehmerstation eines Funkkommunikationssystems

Die Erfindung betrifft ein Verfahren zum Bestimmen des Aufenthaltsortes einer Teilnehmerstation eines Funkkommunikationssystems.

In Funkkommunikationssystemen erfolgt die Kommunikation von Teilnehmerstationen mittels elektromagnetischer Wellen über eine Luftschnittstelle. Eine Art von Funkkommunikationssystemen sind die Mobilfunksysteme. Bekannte Mobilfunksysteme sind beispielsweise GSM (Global System of Mobile Communication) und UMTS (Universal Mobile Telecommunication Standard).

In Funkkommunikationssystemen ist es oftmals von Interesse, festzustellen, wo sich eine bestimmte Teilnehmerstation, die in der Regel mobil ist, im Augenblick befindet. Dies kann beispielsweise im Zusammenhang mit einem Notruf der Teilnehmerstation der Fall sein, um dem Nutzer der Teilnehmerstation, der den Hilferuf ausgelöst hat, Hilfe zukommen zu lassen. Weiterhin ist die Position der Teilnehmerstation dann interessant, wenn dem Teilnehmer ortsbezogene Dienste zur Verfügung gestellt werden sollen. Ortsbezogene Dienste sind solche, die nicht flächendeckend im gesamten Funkkommunikationssystem in gleicher Weise zur Verfügung gestellt werden. Vielmehr sind ortsbezogene Dienste bzw. ihre Inhalte abhängig davon, wo ein sie empfangender Teilnehmer sich gerade befindet.

Zum Bestimmen der Position von Teilnehmerstationen in Funkkommunikationssystemen sind eine Reihe von Verfahren bekannt. Einige von diesen basieren auf der Auswertung von Satellitensignalen, wie es beispielsweise beim GPS (Global Positioning System) der Fall ist. In einigen Mobilfunksystemen kommt zukünftig eine Variante dieses Positionierungsverfahrens zur Anwendung, das so genannten A-GPS (Assisted-GPS). Bei A-GPS erfolgt die Positionsbestimmung teilweise mit Unterstützung von bzw. durch netzseitige Komponenten des Funkkommunikationssystems. Weitere Positionierungsverfahren, die speziell in Mobilfunksystemen zur Anwendung kommen, sind beispielsweise OTDA (Observed Time Differences of Arrival) oder EOTDA (Enhanced OTDA). Bei diesen Verfahren erfolgt eine Positionsbestimmung unter anderem durch Auswertung von Signalen, die zwischen netzseitigen Stationen und der zu lokalisierenden Teilnehmerstationen übertragen werden.

Der Erfindung liegt die Aufgabe zugrunde, eine weitere Möglichkeit zur Bestimmung des Aufenthaltsortes einer Teilnehmerstation in einem Funkkommunikationssystem anzugeben.

Diese Aufgabe wird mit einem Verfahren gemäß Anspruch 1 sowie einer Vorrichtung gemäß dem nebengeordneten Patentanspruch gelöst. Vorteilhafte Ausführungsformen und Weiterbildungen der Erfindung sind Gegenstand abhängiger Ansprüche.

Das erfindungsgemäße Verfahren zum Bestimmen des Aufenthaltsortes einer Teilnehmerstation sieht vor, die Anzahl und/oder die Signalqualität der von der Teilnehmerstation an ihrer Position empfangenen Satellitensignale als Indiz dafür zu berücksichtigen, dass sich die Teilnehmerstation in einem Gebäude aufhält.

Die Erfindung macht sich dabei die Erkenntnis zunutze, dass in Gebäuden häufig die Empfangbarkeit von Satellitensignalen durch Dämpfung stark beeinträchtigt ist. Dabei ist häufig die Dämpfung von Satellitensignalen, die unter einem großen Elevationswinkel an der Teilnehmerstation eintreffen, besonders stark, da diese Signale auf dem Weg zur Teilnehmerstation das oftmals stark dämpfende Dach des Gebäudes passieren müssen und gegebenenfalls noch mehrere Stockwerke innerhalb des Gebäudes. Dagegen sind Satellitensignale, die unter einem Elevationswinkel an der Teilnehmerstation eintreffen, häufig geringer gedämpft, da diese Signale nur durch die Außenwand des Gebäudes bzw. sogar Fensterflächen zur Teilnehmerstation gelangen und entsprechend weniger stark gedämpft werden. Werden nun am aktuellen Aufenthaltsort der Teilnehmerstation von dieser bestimmte Satellitensignale, deren Empfang normalerweise an dieser geografischen Position zu erwarten wäre, nur sehr schwach oder überhaupt nicht empfangen, kann dies als Indiz dafür gelten, dass die starke Dämpfung des entsprechenden Satellitensignals dadurch hervorgerufen wird, dass sich die Teilnehmerstation in einem Gebäude aufhält.

Ein weiteres Indiz für einen Aufenthaltsort innerhalb eines Gebäudes kann durch die Tatsache gegeben sein, dass die empfangbaren Satellitensignale vornehmlich aus der gleichen Richtungam Empfänger eintreffen. Dieser Umstand kann nämlich seine Ursache darin haben, dass alle empfangbaren Satellitensignale (die also nicht zu stark gedämpft werden) über eine Fensterfront des Gebäudes beim Empfänger eintreffen.

Bei der Teilnehmerstation kann es sich insbesondere um eine mobile Teilnehmerstation handeln. Sie kann jedoch auch eine ortsfeste Station sein, die über eine Funkschnittstelle verfügt. Das Funkkommunikationssystem kann ein beliebiges Funkkommunikationssystem sein, jedoch muss die Teilnehmerstation in der Lage sein, entsprechende Satellitensignale zu empfangen bzw. auszuwerten. Insbesondere kann das Funkkommunikationssystem ein Mobilfunksystem sein. Bei den Satellitensignalen kann es sich insbesondere um solche handeln, die von Satelliten eines Positionierungssystems, wie beispielsweise GPS oder das geplante europäische Positionierungssystem GALILEO, ausgesendet werden.

Das Berücksichtigen der Anzahl und/oder der Signalqualität der von der Teilnehmerstation empfangenen Satellitensignale als Indiz dafür, dass sich eine Teilnehmerstation innerhalb oder außerhalb von Gebäuden befindet, bedeutet, dass die Entscheidung, in welcher Umgebung sich die Teilnehmerstation befindet, entweder allein aufgrund der Anzahl und/oder der Signalqualität der empfangenen Satellitensignale getroffen wird oder in Kombination mit weiteren Kriterien bzw. Indizien. Der letztgenannte Fall ist besonders vorteilhaft, da sich hierdurch der Fehlereinfluss bei der Bestimmung des Aufenthaltsortes reduzieren lässt. Insbesondere ist es günstig, wenn dann die verschiedenen Kriterien, von denen die Anzahl und/oder die Signalqualität der empfangenen Satellitensignale nur eines ist, Eingang in ein stochastisches Modell finden, dass in Abhängigkeit der Werte der erfassten Kriterien die Wahrscheinlichkeit dafür ermittelt, dass sich eine Teilnehmerstation innerhalb oder außerhalb von Gebäuden befindet.

Günstig ist es, wenn das erfindungsgemäße Verfahren mit bekannten Verfahren der Ortsbestimmung kombiniert wird, wie beispielsweise die Ortsbestimmung mittels eines bekannten bzw. herkömmlichen Positionierungsverfahrens wie GPS bzw. A-GPS oder EOTDA. Durch die Kombination der Ergebnisse des herkömmlichen Positionierungsverfahrens mit den Ergebnissen des erfindungsgemäßen Verfahrens zur Bestimmung des Aufenthaltsortes der Teilnehmerstation kann die Positionierungsgenauigkeit erhöht werden. Befindet sich die Teilnehmerstation in einem Gebäude, ist die Anzahl der empfangbaren Satellitensignale bzw. deren Signalqualität geringer, als außerhalb des Gebäudes, auch wenn zwischen den geografischen Positionen der Teilnehmerstation nur wenige Meter liegen. Somit kann durch Kombination des erfindungsgemäßen Verfahrens mit herkömmlichen Positionierungsverfahren die Lokalisierungsgenauigkeit erhöht werden.

Nach einer Weiterbildung der Erfindung wird als Maß der Signalqualität eine Empfangsfeldstärke und/oder ein Signal-zu-Rausch-Verhältnis berücksichtigt.

Als weiteres Indiz, dass zur Bestimmung des Aufenthaltsortes der Teilnehmerstation herangezogen werden kann, eignet sich vorteilhafter Weise ein Elevationswinkel wenigstens eines der empfangenen Satellitensignale. Insbesondere eignet sich als Indiz der maximale Elevationswinkel aller durch die Teilnehmerstation an ihrem aktuellen Aufenthaltsort empfangenen Satellitensignale. Aus diesem Kriterium kann nämlich darauf geschlossen werden, dass Satellitensignale mit größerem Elevationswinkel als dieser festgestellte maximale Elevationswinkel, die normalerweise auch in der Nähe des Aufenthaltsortes der Teilnehmerstation empfangen werden müssten, durch ein Gebäude, in dem sich die Teilnehmerstation befindet, stark gedämpft werden, so dass deren Empfang durch die Teilnehmerstation beeinträchtigt ist.

Als weiteres bzw. alternatives Indiz für den Aufenthalt in einem Gebäude kann auch ein Winkelbereich berücksichtigt werden, in dem die Azimuth-Winkel aller durch die Teilnehmerstation empfangenen Satellitensignale liegen.

Ebenso kann zusätzlich als weiteres oder alternatives Indiz für den Aufenthalt in einem Gebäude die Empfangbarkeit von Signalen wenigstens einer landgestützten netzseitigen Station wie beispielsweise einer Basisstation eines Mobilfunksystems berücksichtigt werden. Dabei kann es sich insbesondere um die Empfangsfeldstärke eines solchen Signals an der Teilnehmerstation handeln.

Nach einer Weiterbildung der Erfindung kann als Indiz der Mittelwert der Empfangsfeldstärken von Signalen wenigstens zweier netzseitiger Stationen berücksichtigt werden. In der Regel kann man im Mittel innerhalb von Gebäuden geringere Feldstärken der Empfangssignale aufnehmen, da diese durch die Gebäudehülle gedämpft werden.

Als weiteres bzw. alternatives Indiz für den Aufenthalt in einem Gebäude kann auch ein Signallaufzeitwert wie beispielsweise ein Timing-Advance-Wert eines zwischen einer landgestützten netzseitigen Station und der Teilnehmerstation übertragenen Signals berücksichtigt werden.

Es ist auch möglich, dass als weiteres bzw. alternatives Indiz für den Aufenthalt der Teilnehmerstation in einem Gebäude die Zeit berücksichtigt wird, die für die Durchführung einer (herkömmlichen, insbesondere mit Hilfe der Satellitensignale durchgeführten) Positionsbestimmung der Teilnehmerstation benötigt wird. Eine solche Positionsbestimmung kann mit einem herkömmlichen Positionsbestimmungsverfahren, beispielsweise unter Nutzung des GPS-Positionierungssystems durchgeführt werden. Ist die Zeitdauer für die Durchführung eines solchen Positionierungsverfahrens relativ lang, kann darauf geschlossen werden, dass die Signalqualität der Satellitensignale relativ schlecht ist und somit die Wahrscheinlichkeit groß ist, dass die Beeinträchtigung der Signalqualität durch ein Gebäude, in dem sich die Teilnehmerstation befindet, hervorgerufen wird. Für die Teilnehmerstation bedeutet dies, dass sie einen entsprechend langen Ausschnitt der Satellitensignale betrachten muss, um diese auswerten zu können.

Die erfindungsgemäße Vorrichtung zum Bestimmen des Aufenthaltsortes einer Teilnehmerstation eines Funkkommunikationssystems weist Mittel zur Durchführung des Bestimmens des Aufenthaltsortes auf, die so ausgestaltet sind, dass das erfindungsgemäße Verfahren durchführbar ist. Ausführungsformen und Weiterbildungen der erfindungsgemäßen Vorrichtung weisen Mittel auf, die dazu dienen, die Ausführungsformen und Weiterbildungen des erfindungsgemäßen Verfahrens durchzuführen.

Die Erfindung wird im Folgenden anhand eines in den Figuren dargestellten Ausführungsbeispiels näher erläutert. Es zeigen:
- Figur 1: ein Funkkommunikationssystem, in dem sich eine Teilnehmerstation außerhalb eines Gebäudes befindet
- Figur 2: das Funkkommunikationssystem aus Figur 1, bei dem sich die Teilnehmerstation innerhalb eines Gebäudes befindet und
- Figur 3: ein weiteres Funkkommunikationssystem, anhand dessen ein zweites Ausführungsbeispiel der Erfindung erläutert wird.

Die Erfindung wird im Folgenden anhand zweier Ausführungsbeispiele erläutert, bei denen der Aufenthaltsort einer mobilen Teilnehmerstation eines Mobilfunksystems bestimmt werden soll. Die Erfindung ist jedoch auch anwendbar auf andere Funkkommunikationssysteme als Mobilfunksysteme und auf stationäre Teilnehmerstationen.

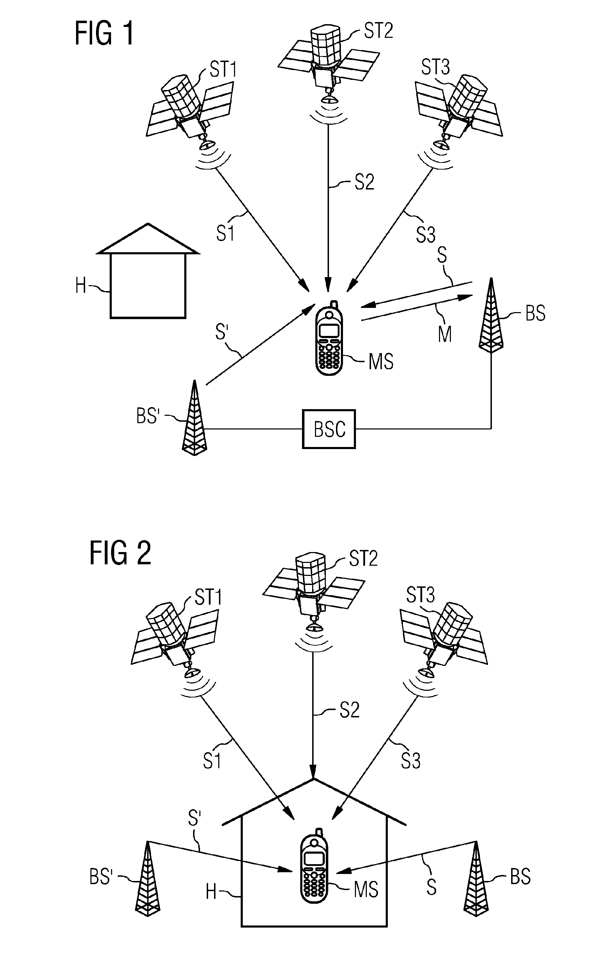

Figur 1 zeigt eine Teilnehmerstation MS innerhalb eines zellularen Mobilfunksystems mit Basisstationen BS, BS'. Jede Basisstation BS, BS' versorgt eine (in Figur 1 nicht dargestellte) Funkzelle. Die Basisstationen BS, BS' übertragen Signale S, S' zur Teilnehmerstation MS. Dabei kann es sich um Signale eines Organisationskanals wie den BCCH (Broadcast Control Channel) bei GSM handeln. In Figur 1 befindet sich die Teilnehmerstation MS außerhalb eines Gebäudes H unter freiem Himmel. Sie empfängt von drei Satelliten ST1, ST2, ST3 eines satellitengestützten Positionierungssystems, beispielsweise GPS, Signale S1, S2, S3. Bei diesem Ausführungsbeispiel erfasst die Teilnehmerstation MS die Anzahl der empfangenen Satellitensignale S1, S2, S3, deren Elevationswinkel und Azimuth-Winkel sowie ihre Signalqualität. Ferner ermittelt die Teilnehmerstation MS die Empfangssignalqualität der Signale S, S' der beiden Basisstationen BS, BS'. Die Empfangsqualität kann beispielsweise durch Erfassen der Empfangsfeldstärke und/oder des Signal-zu-Rauschverhältnisses der Signale S1, S2, S3, S, S' erfolgen. Ferner führt die Teilnehmerstation MS eine dem Fachmann bekannte, also herkömmliche Positionsbestimmung mittels des satellitengestützten Positionierungssystems durch entsprechende Auswertung der Satellitensignale S1, S2, S3 durch. Obwohl in Figur 1 nur drei derartige Satellitensignale gezeigt sind, kann es in der Realität erforderlich sein, für die Durchführung einer solchen Positionierung mehr als drei Satellitensignale, beispielsweise vier, zu empfangen. Aus Gründen der Übersichtlichkeit wurden in Figur 1 jedoch lediglich drei dieser Signale dargestellt.

Während es bei anderen Ausführungsformen der Erfindung möglich ist, dass die Teilnehmerstation MS selbst die oben genannten erfassten Messwerte auf die erfindungsgemäße Art auswertet, geschieht dies beim hier betrachteten Ausführungsbeispiel nicht. Vielmehr übermittelt die Teilnehmerstation MS alle Messergebnisse an die erste Basisstation BS, die diese an eine netzseitige Einrichtung in Form eines Basisstationscontrollers BSC weiterleitet. Die Messergebnisse werden gemäß Figur 1 mittels Signalen M von der Teilnehmerstation MS über die erste Basisstation BS zum Basisstationscontroller BSC übermittelt. Bei anderen Ausführungsbeispielen der Erfindung kann die Auswertung der Messergebnisse auch durch eine andere netzseitige Vorrichtung als durch einen Basisstationscontroller durchgeführt werden.

Der Basisstationscontroller BSC in Figur 1 ermittelt nun anhand eines stochastischen Modells die Wahrscheinlichkeit dafür, dass sich die Teilnehmerstation in einem Gebäude oder außerhalb eines Gebäudes befindet. Dabei werden die von der Teilnehmerstation MS ermittelten Messwerte als Eingangsgrößen dieses stochastischen Modells verwendet. Die mathematische Formulierung des stochastischen Modells kann auf herkömmliche Weise geschehen und wird daher hier nicht näher erläutert. Die Erfindung beruht vielmehr darin, bestimmte Messgrößen als Indizien für die Wahrscheinlichkeit eines Aufenthaltes der Teilnehmerstation MS innerhalb oder außerhalb eines Gebäudes H zu verwenden. So sieht das stochastische Modell vor, dass die von der Teilnehmerstation MS erfasste Anzahl und Signalqualität der Satellitensignale S1, S2, S3 und die Signalqualität der Signale S, S' der Basisstationen BS, BS' als Indizien verwendet werden. Bei der in Figur 1 dargestellten Situation empfängt die Teilnehmerstation MS alle drei Satellitensignale S1, S2, S3 sowie die Signale S, S' der Basisstationen BS, BS' mit relativ hoher Empfangsfeldstärke bzw. einem hohen Signal-zu-Rausch-Verhältnis. Dies wird vom Basisstationscontroller BSC als Indiz dafür gewertet, dass sich die Teilnehmerstation MS wahrscheinlich außerhalb eines Gebäudes befindet.

Da die Teilnehmerstation MS ferner über die Signale M auch das Ergebnis der bereits durchgeführten herkömmlichen Positionsbestimmung gemäß dem satellitengestützten Positionierungssystem (beispielsweise GPS) dem Basisstationscontroller BSC und die entsprechenden Elevationswinkel und Azimuth-Winkel der Satellitensignale S1, S2, S3 mitteilt, ist der Basisstationscontroller BSC in der Lage, für die mittels des satellitengestützten Positionierungssystems ermittelte Position festzustellen, ob die von der Teilnehmerstation MS erfassten Azimuth-Winkel und Elevationswinkel, insbesondere der maximale Winkel der festgestellten Elevationswinkel, mit den entsprechenden Winkeln normalerweise zu erwartender empfangbarerer Satellitensignale an dieser geografischen Position übereinstimmen.

Als weiteres Indiz findet in das innerhalb des Basisstationscontrollers BSC realisierte stochastische Modell der Mittelwert der Empfangsfeldstärken der Signale S, S' der beiden Basisstationen BS, BS' Eingang. Durch die Wände und das Dach des Gebäudes werden die Signale S, S' der beiden Basisstationen BS, BS' stärker gedämpft empfangen als außerhalb des Gebäudes H. Entsprechend nimmt das stochastische Modell mit einer höheren Wahrscheinlichkeit an, dass sich der Teilnehmer im Gebäude H befindet, wenn ein kleiner Mittelwert der Signale S, S' gemessen wird.

Die Teilnehmerstation MS erfasst auch die Zeitdauer, die sie benötigt, um die (herkömmliche) Positionsbestimmung mittels des satellitengestützten Positionierungssystems durchzuführen. Sie teilt diese Zeitdauer ebenfalls über die Signale M der Basisstation BS mit, die diese weiter zum Basisstationscontroller BSC leitet. Diese Zeitdauer kann bei anderen Ausführungsbeispielen auch vorteilhaft, unter Vernachlässigung der Netzlatenzen, vom Basisstationscontroller BSC als zeitliche Differenz zwischen dem Absenden des Meßauftrags und Eintreffen des Ergebnisses ermittelt werden.

Diese Zeitdauer findet ebenfalls Eingang in das stochastische Modell. Ist die Zeitdauer relativ groß, wird dies innerhalb des Modells als Indiz dafür gewertet, dass die Satellitensignale S1, S2, S3 nur eine relativ schlechte Signalqualität aufweisen und daher die Teilnehmerstation MS sich eher innerhalb eines Gebäudes als außerhalb befindet.

Die beiden Basisstationen BS, BS' aus Figur 1 erfassen darüber hinaus auch auf den Fachmann bekannte Weise eine Signallaufzeit in Form eines Timing-Advance-Wertes für von ihnen zur Teilnehmerstation MS übertragene Signale. Dies geschieht aufgrund von zwischen den Basisstationen BS, BS' und der Teilnehmerstation MS ausgetauschten Signalen (in Figur 1 nicht dargestellt). Die Ergebnisse dieser Timing-Advance-Messungen werden ebenfalls dem Basisstationscontroller BSC von der jeweiligen Basisstation BS, BS' zur Verfügung gestellt.

Figur 2 zeigt das Funkkommunikationssystem aus Figur 1 mit dem Unterschied, dass sich die Teilnehmerstation MS nunmehr nicht außerhalb eines Gebäudes sondern innerhalb des Gebäudes H befindet. Dies hat zur Folge, dass die Signale S, S' der Basisstationen BS, BS' von der Teilnehmerstation MS nur noch stark gedämpft empfangen werden. Ebenso wird das erste Satellitensignal S1 sowie das dritte Satellitensignal S3 der beiden Satelliten S1, S3, deren Signale S1, S3 mit geringem Elevationswinkel an der Teilnehmerstation MS eintreffen, gegenüber dem in Figur 1 dargestellten Fall, bei dem sich die Teilnehmerstation MS außerhalb eines Gebäudes befindet, stärker gedämpft empfangen. Das zweite Satellitensignal S2, das nahezu lotrecht an der Teilnehmerstation MS einfällt, wird durch das Dach des Gebäudes H und mehrere oberhalb der Teilnehmerstation MS befindliche Stockwerke des Gebäudes H sogar so stark gedämpft, dass kein Empfang durch die Teilnehmerstation MS mehr möglich ist. Die Teilnehmerstation MS erfasst dieselbe Art von Messwerten wie anhand der Figur 1 weiter oben bereits erläutert und übermittelt die entsprechenden Messergebnisse über die Signale M zur ersten Basisstation BS, von wo sie wiederum zum Basisstationscontroller BSC weitergeleitet werden (in Figur 2 nicht dargestellt). Der Basisstationscontroller BSC ermittelt nun mittels seines stochastischen Modells und den mitgeteilten Messwerten als Eingangsgrößen dieses Modells eine hohe Wahrscheinlichkeit dafür, dass sich die Teilnehmerstation MS innerhalb des Gebäudes H befindet.

Die Erfindung eignet sich vorteilhaft in Verbindung mit ortsabhängigen Diensten. Beispielsweise kann es vorgesehen sein, derartige Dienste gezielt nur Teilnehmerstationen MS zur Verfügung zu stellen, die sich innerhalb von Gebäuden bzw. innerhalb eines bestimmten Gebäudes H befinden. Dies kann sich beispielsweise um eine gezielte Werbung eines Kaufhauses handeln, das seine Ladenräume innerhalb des Gebäudes H hat. Eine zweite nützliche Anwendung der Erfindung ist es, dass der Betreiber des Funkkommunikationssystems in der Lage ist, zu beurteilen, ob von der Teilnehmerstation MS mitgeteilte Messwerte der Empfangsqualität davon beeinflusst sind, dass sich die Teilnehmerstation MS innerhalb eines Gebäudes H befindet. Der Netzbetreiber ist somit in der Lage, festzustellen, wie gut die Empfangsqualität der innerhalb seines Kommunikationssystems übertragenen Signale innerhalb von Gebäuden H ist. Diese Information ist besonders wichtig für die Funknetzplanung eines Mobilfunksystems.

Bei anderen Ausführungsbeispielen kann statt der Signalqualität aller empfangenen Satellitensignale S1, S2, S3 alternativ auch nur der Mittelwert der beispielsweise vier Satellitensignale mit der besten Empfangsqualität über die Signale M dem Netz mitgeteilt werden. Es ist auch möglich, den Mittelwert der Empfangsqualität aller empfangenen Satellitensignale dem Netz mitzuteilen. Die Teilnehmerstation MS kann statt des Elevationswinkels aller empfangenen Satellitensignale S1, S2, S3 nur den maximalen dieser Werte der Basisstation BS mitteilen. Weiterhin ist es möglich den kleineren Wert der beiden größten Elevationswinkel aller empfangenen Satellitensignale S1, S2, S3 über die Signale M der Basisstation BS mitzuteilen.

Ferner ist es möglich, alternativ oder zusätzlich als Indiz für den Aufenthalt innerhalb des Gebäudes H die Anzahl der durch die Teilnehmerstation MS empfangenen Signale S, S' in der Nähe befindlicher Basisstationen zu erfassen. Eine weitere Möglichkeit ist es, die Signalqualität der Empfangssignale als Indikation, ob sich ein Teilnehmer im Gebäude H aufhält, zu verwenden. In GSM wird die Empfangsqualität durch die Messwerte RXQUAL_SUB und RXQUAL_FULL von der Teilnehmerstation MS an das Netz signalisiert. Entsprechend schlechtere Werte ergeben sich im Mittel für Teilnehmer innerhalb von Gebäuden, da die Gebäudeaußenhülle die Signale dämpft, weiterhin ergeben sich schlechtere Empfangswerte durch Reflexionen, Beugungen und Signalstreuungen.

Während beim hier betrachteten Ausführungsbeispiel die Positionsbestimmung mittels des GPS-Positionierungssystems durchgeführt wird, kann die herkömmliche Positionsbestimmung auch durch das dem Fachmann bekannte A-GPS-Verfahren oder durch andere dem Fachmann bekannte Verfahren durchgeführt werden.

Wird zur herkömmlichen Positionsbestimmung ein satellitengestütztes Positionierungssystem herangezogen, wie bei den hier betrachteten Ausführungsbeispielen, dient die Teilnehmerstation MS der Erfassung von Messwerten anhand entsprechender Satellitensignale, mittels derer zum einen auf die herkömmliche Weise die Position der Teilnehmerstation ermittelt wird und zum anderen auf erfindungsgemäße Weise die Wahrscheinlichkeit ermittelt wird, ob sich die Teilnehmerstation in einem Gebäude befindet oder nicht.

Es wurde festgestellt, dass von größter Bedeutung für die Bestimmung der Wahrscheinlichkeit eines Aufenthalts in einem Gebäude die beiden Kriterien Anzahl der empfangenen Satellitensignale und Empfangsqualität der Satellitensignale sind. Von mittlerer Bedeutung für die Korrektheit der Feststellung, ob sich die Teilnehmerstation innerhalb oder außerhalb eines Gebäudes befindet, sind die Kriterien Mittelwert der Empfangsqualität der Signale S, S' der benachbarten Basisstationen BS, BS', die Azimuth-Winkel und Elevationswinkel der empfangenen Satellitensignale S1, S2, S3.

Die Erfindung hat gegenüber herkömmlichen Positionsbestimmungsverfahren den Vorteil, dass diese gewisse Unsicherheiten bei der Positionsbestimmung haben, deren Größenordnung in bestimmen Fällen oberhalb der Größenordnung der Ausdehnung von Gebäuden liegen. Daher ist in der Regel die Bestimmung, ob sich ein Teilnehmer innerhalb eines Gebäudes befindet, mittels der herkömmlichen Positionsbestimmungsverfahren allein wegen der beschränkten Ausdehnung der Gebäude nicht möglich. Die Erfindung ermöglicht nun, in Kombination mit herkömmlichen Positionsbestimmungsverfahren den Aufenthaltsort einer Teilnehmerstation genauer zu bestimmen, als unter Verwendung lediglich der herkömmlichen Verfahren.

Die genannten Kriterien bzw. Indizien für den Aufenthalt einer Teilnehmerstation MS im Freien bzw. innerhalb eines Gebäudes können mit bekannten Regressionsverfahren, zum Beispiel der multiple linear regression, zur Bildung eines stochastischen Modells verwendet werden. Ein solches Modell liefert dann entsprechende Wahrscheinlichkeiten, mit denen sich die Teilnehmerstation MS in einem Gebäude oder außerhalb des Gebäudes befindet.

Die Erfindung eignet sich auch bei der Vergebührung der Nutzung des Funkkommunikationssystems, nämlich im Zusammenhang mit den so genannten Heimatzonen (home zone billing). Hier kann es erwünscht sein, einem Teilnehmer günstige Gebühren einzuräumen, sofern er sich innerhalb seiner Wohnung bzw. seines Hauses befindet, während er außerhalb des Gebäudes höhere Gebühren berechnet bekommt. Es wäre auch möglich, abhängig von der Feststellung, ob sich eine Teilnehmerstation MS im Gebäude befindet, in dem der entsprechende Teilnehmer wohnt, gezielt Rufumleitungen zu ändern oder bei der Detektion, dass der Teilnehmer sich in einem beliebigen Gebäude befindet die Teilnehmerstation MS auf stumme Rufsignalisierung zu schalten.

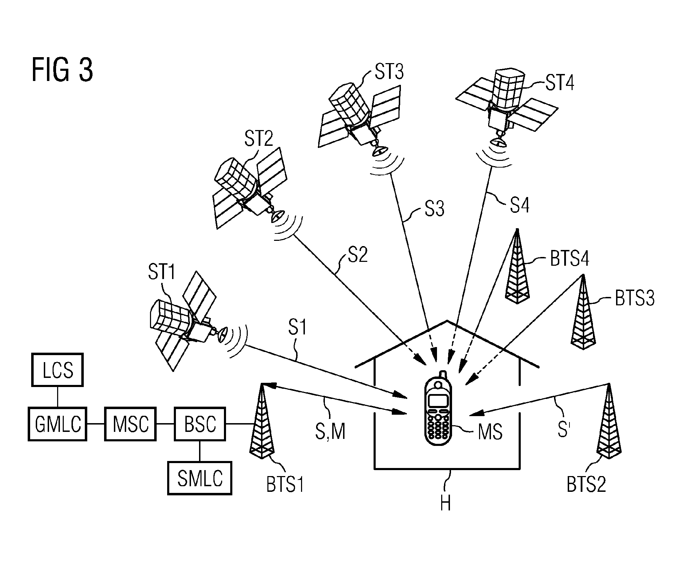

Figur 3 zeigt für ein zweites Ausführungsbeispiel ein GSM-Mobilfunksystem bei dem eine herkömmliche Positionsbestimmung ebenfalls mit Hilfe von Satelliten erfolgt, wobei auch ermittelt wird, ob sich eine Teilnehmerstation MS innerhalb eines Gebäudes H aufhält oder nicht. Eine Anwendung LCS, die einen ortsabhängigen Dienst anbietet, fragt bei einem Gateway GMLC (Gateway Mobile Location Center) nach der Position der Teilnehmerstation MS. Diese Anfrage wird von dem Gateway GMLC an eine entsprechende Vermittlungseinrichtung MSC (Mobile Switching Center) weiter geleitet, die ihrerseits eine Anfrage an einen Basisstationscontroller BSC stellt, über den eine Basisstation BTS1, über die die Teilnehmerstation MS mit dem Mobilfunknetz kommuniziert, angeschlossen ist. Für die Bestimmung der Position ist ein Lokalisierungszentrum SLMC (Serving Mobile Location Center) zuständig, das über den Basisstationscontroller BSC und die betroffene Basisstation BTS1 mit der Teilnehmerstation MS kommuniziert. Bei diesem Ausführungsbeispiel nutzt die Teilnehmerstation MS A-GPS (Assisted-GPS) zur herkömmlichen Positionsbestimmung, wobei das Lokalisierungszentrum SLMC entsprechende Hilfsdaten an die Teilnehmerstation sendet. Die Teilnehmerstation MS vermisst Signale S1 bis S4 von GPS-Satelliten ST1 bis ST4 und reicht diese Daten zur Durchführung der Positionsbestimmung an das Lokalisierungszentrum SMLC weiter. Zusätzlich werden Messdaten zur Bestimmung der Wahrscheinlichkeit, dass sich die Teilnehmerstation MS in einem Gebäude H befindet, erfasst und an das Positionierungszentrum SMLC mittels entsprechender Signale M weitergeleitet.

In der Figur 3 erkennt man exemplarisch, wie das die Teilnehmerstation MS umgebende Gebäude H die einzelnen Signale S1 bis S4 der Satelliten ST1 bis ST4 bzw. Basisstationen BTS1 bis BTS4 beeinflusst. So werden insbesondere diejenigen Satellitensignale S2, S3, S4, die über das Dach des Gebäudes H bei der Teilnehmerstation MS eintreffen, besonders stark gedämpft, wohingegen Satelliten ST1 mit einer geringen Elevation, dass heißt kleinen Elevationswinkeln, günstigere Ausbreitungsbedingungen vorfinden, da ihre Signale S1 durch nicht so stark dämpfende Fensterscheiben bis zur Teilnehmerstation MS gelangen. Ähnliches gilt für die Signale der die Teilnehmerstation MS bedienenden ersten Basisstation BTS1 und zweiten Basisstation BTS2, deren Signale S, S' nur geringfügig gedämpft zur Teilnehmerstation MS gelangen. Dagegen werden Signale der weiteren Nachbarbasisstationen BTS3 und BTS4 durch das Dach des Gebäudes H relativ stark gedämpft.

Bei diesem Ausführungsbeispiel, bei dem die (herkömmliche) Positionsbestimmung der Teilnehmerstation MS mittels A-GPS erfolgt, müssen die Elevationswinkel der empfangenen Satellitensignale S1 bis S4 nicht von der Teilnehmerstation MS zum Lokalisierungszentrum SMLC übermittelt werden. Vielmehr können diese durch das Lokalisierungszentrum SMLC auf dem Fachmann bekannte Art selbst ermittelt werden.

Im Unterschied zum Ausführungsbeispiel aus den Figuren 1 und 2 erfolgt im vorliegenden Ausführungsbeispiel gemäß Figur 3 die Ermittlung, ob sich die Teilnehmerstation MS innerhalb des Gebäudes H befindet, nicht im Basisstationscontroller BSC, sondern im Lokalisierungszentrum SMLC. Zu diesem Zwecke verfügt das Lokalisierungszentrum SMLC über ein entsprechendes stochastisches Modell, das mit den weiter oben bereits erläuterten Kenngrößen bzw. Messwerten als Eingangsgrößen versorgt wird, die jeweils Indizien für die Aufenthaltswahrscheinlichkeit der Teilnehmerstation MS in einem Gebäude sind. Das Ergebnis der Ermittlung, ob sich die Teilnehmerstation MS im Gebäude H befindet bzw. ein Wahrscheinlichkeitswert hierfür, gelangt schließlich vom Lokalisierungszentrum SMLC über den Basisstationscontroller BSC, die Vermittlungseinrichtung MSC und das Gateway GMLC zur Lokalisierungsanwendung LCS.

Bei anderen Ausführungsbeispielen der Erfindung erfolgt die herkömmliche Positionsbestimmung der Teilnehmerstation MS nicht nach dem GPS-Verfahren, sondern nach dem A-GPS-Verfahren. Dann erfolgt die Berechnung der Position der Teilnehmerstation in einer netzseitigen Einheit, dem SLMC (Serving Mobile Location Center). Hierbei werden auch die Empfangswinkel (Azimuth und Elevation) an der Teilnehmerstation im SLMC berechnet, so dass eine separate Erfassung durch die Teilnehmerstation nicht notwendig ist.

Ein vorteilhaftes Ausführungsbeispiel sieht vor, dass das stochastische Modell zur Ermittlung der Wahrscheinlichkeit, dass sich die Teilnehmerstation MS in einem oder außerhalb eines Gebäudes aufhält, ebenfalls in einem SLMC (anstelle des Basisstationscontrollers BSC aus Figur 1) realisiert ist.

Ein weiteres Indiz für den Aufenthalt in einem Gebäude kann die Geschwindigkeit der Teilnehmerstation MS sein. Höhere Geschwindigkeiten sind nämlich nur außerhalb von Gebäuden zu erwarten. Daher kann die Geschwindigkeit der Teilnehmerstation MS auch Eingangsgröße des stochastischen Modells sein.

Statt der in diesen Ausführungsbeispielen verwendeten Mittelwerte bestimmter Größen (z.B. der Empfangsfeldstärken der von mehreren netzseitigen Stationen ausgesendeten Signalen S, S') können auch z.B. deren Medianwerte verwendet werden.

## Patentansprüche

1. Verfahren zum Bestimmen des Aufenthaltsortes einer Teilnehmerstation (MS) eines Funkkommunikationssystems, bei dem
die Anzahl und/oder Signalqualität der von der Teilnehmerstation (MS) an ihrer Position empfangenen Satellitensignale (S1, S2, S3) als Indiz dafür berücksichtigt wird, dass sich die Teilnehmerstation in einem Gebäude (H) aufhält.

2. Verfahren nach Anspruch 1, bei dem
als Maß der Signalqualität eine Empfangsfeldstärke und/oder ein Signal-zu-Rausch-Verhältnis berücksichtigt wird.

3. Verfahren nach einem der vorstehenden Ansprüche, bei dem als weiteres Indiz für den Aufenthalt in einem Gebäude (H) ein Elevationswinkel wenigstens eines der empfangenen Satellitensignale (S1, S2, S3) berücksichtigt wird.

4. Verfahren nach Anspruch 3, bei dem
der maximale Elevationswinkel der empfangenen Satellitensignale (S1, S2, S3) berücksichtigt wird.

5. Verfahren nach einem der vorstehenden Ansprüche, bei dem als weiteres Indiz für den Aufenthalt in einem Gebäude (H) ein Winkelbereich berücksichtigt wird, in dem die Azimuthwinkel aller empfangenen Satellitensignale (S1, S2, S3) liegen.

6. Verfahren nach einem der vorstehenden Ansprüche, bei dem als weiteres Indiz für den Aufenthalt in einem Gebäude (H) die Empfangbarkeit von Signalen (S) wenigstens einer landgestützten netzseitigen Station (BS) des Funkkommunikationssystems berücksichtigt wird.

7. Verfahren nach Anspruch 6, bei dem
als Indiz die Empfangsfeldstärken von durch die Teilnehmerstation (MS) empfangenen Signalen (S) der wenigstens einen netzseitigen Station (BS) berücksichtigt wird.

8. Verfahren nach Anspruch 7, bei dem
als Indiz der Mittelwert der Empfangsfeldstärken von Signalen (S, S') wenigstens zweier netzseitiger Stationen (BS, BS') berücksichtigt wird.

9. Verfahren nach einem der vorstehenden Ansprüche, bei dem als weiteres Indiz für den Aufenthalt in einem Gebäude (H) ein Signallaufzeit-Wert eines zwischen einer landgestützten netzseitigen Station (BS) und der Teilnehmerstation (MS) übertragenen Signals (S) berücksichtigt wird.

10. Verfahren nach einem der vorstehenden Ansprüche, bei dem als weiteres Indiz für den Aufenthalt in einem Gebäude (H) die Zeit berücksichtigt wird, die für die Durchführung einer Positionsbestimmung der Teilnehmerstation (MS) benötigt wird.

11. Vorrichtung zum Bestimmen des Aufenthaltsortes einer Teilnehmerstation (MS) eines Funkkommunikationssystems, mit Mitteln zur Durchführung des Bestimmens des Aufenthaltsortes, die die Anzahl und/oder die Signalqualität der von der Teilnehmerstation (MS) an ihrer Position empfangenen Satellitensignale (S1, S2, S3) als Indiz dafür berücksichtigen, dass sich die Teilnehmerstation in einem Gebäude (H) aufhält.
